# EUROPEAN PATENT SPECIFICATION

(11) **EP 3 095 316 B1**
(45) Date of publication and mention of the grant of the patent: **03.10.2018**
(21) Application number: 16168031.9
(22) Date of filing: 03.05.2016
(51) Int. Cl.: A01D 78/10, A01B 73/04

(54) **AN AGRICULTURAL MACHINE AND A METHOD FOR PROCESSING CROP**
LANDWIRTSCHAFTLICHE MASCHINE UND VERFAHREN ZUR VERARBEITUNG VON FELDFRÜCHTEN
MACHINE AGRICOLE ET PROCÉDÉ DE TRAITEMENT DE RÉCOLTE

(30) Priority: 19.05.2015 NL 2014827
(43) Date of publication of application: 23.11.2016
(73) Proprietor: Forage Company B.V., 3147 PB Maassluis (NL)
(72) Inventor: VAN DER LELIJ, Bart, 3147 PB Maassluis (NL)
(74) Representative: AGCO Intellectual Property Department

(56) References cited:
- EP-A1- 1 290 936
- EP-A1- 2 253 186
- US-A1- 2007 023 195

## Description

The invention relates to an agricultural machine, in particular a haymaking machine for processing crop which lies loosely on the ground, such as mowed grass or hay.

Such a machine is generally known. The machine has a rake rotor that can be moved between a transport position and an operational position, for example a headland position and/or a working position. The machine comprises a first hydraulic cylinder for adjusting a distance of the rake rotor relative to the frame, as seen in a direction transverse to the direction of travel. The machine also comprises a second hydraulic cylinder arranged between a pivotable arm and the frame to move the arm between a raised position, wherein the rake rotor has its transport position, and a lowered position, wherein the rake rotor is in the operational position, i.e. the headland position or the working position. During unfolding of the rake rotor from the transport position towards the operational position, the first hydraulic cylinder first has to set the distance between the rake rotor and the frame to a minimum distance to create enough space for the rake rotor to move to the operational position without being hindered by the ground, frame and/or a rake rotor arranged on an opposite side of the frame. In practice this means that in the transport position the first hydraulic cylinder first lifts the rake rotor and subsequently the rake rotor is moved, by pivotal movement of the arm, to the operational position using the second hydraulic cylinder. The folding of the rake rotor from the operational position to the transport position is done by carrying out these steps in reverse order.

A drawback of such a machine is that in some situations lifting the rake rotor prior to pivoting the arm with the rake rotor to the operational position, or vice versa, rotating the rake rotor to the transport position and then lowering the rake rotor results in an unstable machine, especially on slopes.

It is an object of the invention to provide an improved agricultural machine, in particular with respect to stability during folding and unfolding of the rake rotor between the transport position and the operational position.

This object is achieved in accordance with the invention by an agricultural machine, in particular for windrowing crop lying loosely on the ground, for example mowed grass or hay, such as a rotary swather, the machine comprising:
- a frame;
- an arm being pivotally connected to the frame about a substantially horizontal axis;
- a sliding member being connected to the arm in such a manner that the sliding member can be displaced along the arm in its longitudinal direction,
- a hydraulic system, the hydraulic system comprising:
   - a first hydraulic cylinder being configured to adjust the position, as seen in the longitudinal direction of the arm, of the sliding member relative to the arm,
   - a second hydraulic cylinder being configured to pivot the arm relative to the frame,
- a rake rotor being carried by the sliding member, the rake rotor being displaceable, using the hydraulic system, between a transport position, wherein the arm extends substantially vertically, and at least one operational position, for example a headland position and/or working position, wherein the arm protrudes outwards with respect to the frame, in particular substantially horizontally,
wherein the first hydraulic cylinder and the second hydraulic cylinder are connected to each other, in particular hydraulically in series with respect to each other, in such a manner that when the second hydraulic cylinder is actuated by means of pressurized hydraulic fluid for pivoting the arm from the transport position towards the operational position, for example the headland position and/or working position, hydraulic fluid discharged from the second hydraulic cylinder is supplied under pressure to the first hydraulic cylinder for displacing the sliding member outwards along the arm substantially from the start of the pivoting movement of the arm from the transport position.

Thus, with the rake rotor in the raised transport position, the arm has been pivoted into the raised position, wherein the arm extends substantially vertically. When the rake rotor is unfolded towards the operational position, the pivoting movement of the arm and the translating movement of the sliding member carrying the rake rotor are carried out substantially simultaneously. After all, the first and second hydraulic cylinder are coupled such that unfolding the arm and increasing the distance between the rake rotor and the frame occurs simultaneously. The operation of the first and second hydraulic cylinders is synchronized. When the headland position is reached, the arm protrudes outwards relative to the frame and the rake rotor is still above the ground to the extent that it cannot process crop lying on the ground. Then, the rake rotor can be displaced further, for example by actuating another hydraulic cylinder, to the working position, wherein the arm is in a lowered position and the rake rotor is arranged for processing crop lying loosely on the ground. It is noted that the pivoting movement of the arm for displacing the rake rotor from the headland position to the working position does not have to be coupled to any translating movement of the sliding member carrying the rake rotor. In this manner, during folding and unfolding the machine, the rake rotor remains closer to the ground, thereby increasing the stability of the machine according to the invention, especially on slopes.

A further advantage is that the first hydraulic cylinder is used to position the rake rotor at a minimum distance of the frame during the folding and unfolding process without needing additional safety measures as in the prior art to prevent any interference between the rake rotor and the ground, the frame or other parts of the machine.

It is noted that EP2253186A1 discloses a haymaking machine having a carrying structure and two lateral arms each being articulated on said support structure and being provided with a first hydraulic cylinder for pivoting it about its articulation axis. A sliding member carrying a rake rotor can be displaced along an outer part of each lateral arm in its longitudinal direction by means of a second hydraulic cylinder, which is hydraulically connected in parallel with the first hydraulic cylinder. Each rake rotor can be displaced by means of the lateral arms from a working position to a headland position. When displacing from the working position to the headland position, a control valve actuates the first and second hydraulic cylinders by means of pressurized hydraulic fluid for combining a lifting movement of the lateral arms about their articulation axes and an outward movement of the rake rotors along the lateral arms. Thus, when the first hydraulic cylinders are actuated for lifting the lateral arms to the headland position, the second hydraulic cylinders, being hydraulically connected in parallel, are simultaneously actuated for sliding the rake rotors outwards along the lateral arms. The outward movement of the rake rotors along the arms increases the ground clearance in the headland position. When the machine is displaced from the transport position to the working position, the control valve is positioned to direct pressurized hydraulic fluid to the first and second hydraulic cylinders in such a manner that the first hydraulic cylinders are extended whereas the second hydraulic cylinders are held in a fully retracted position, i.e. the sliding members carrying the rotors are kept at a minimum distance from the longitudinal centre line of the machine while the arms are lowered. In the transport position, the control valve can be closed for hydraulically locking the machine. Although not mentioned in this prior art document, in order to prevent the machine from unfolding inadvertently, the machine will have a mechanical lock for locking the machine in the transport position. It is noted that in the transport position, with the control valve closed, the first and second hydraulic cylinders, being still connected in parallel, might behave in a "master/slave" manner, i.e. if hydraulic fluid were discharged from the head-side chamber of the first hydraulic cylinder, said hydraulic fluid would be supplied to the bottom-side chamber of the second hydraulic cylinder. However, even if the mechanical lock is released, it would be unlikely that the machine unfolds from the transport position automatically under the influence of gravity, since the rake rotors are hanging with their full weight on the second hydraulic cylinders thereby holding them in their fully retracted positions, whereas the torque caused by the weight of the rake rotors about the articulation axes of the lateral arms, which are vertically extending in the transport position, is relatively small.

In a preferred embodiment according to the invention, the hydraulic system comprises a control valve which can be set in an unfolding position for actuating the second hydraulic cylinder by means of pressurized hydraulic fluid for pivoting the arm from the transport position towards the operational position, for example the headland position and/or working position. When the rake rotor is in the transport position, the control valve can be brought to its unfolding position. In the unfolding position, the control valve is configured to direct pressurized hydraulic fluid, for example from a source of hydraulic fluid under pressure, such as a pump or compressor of a tractor, to the second hydraulic cylinder so that the arm is unfolded from the transport position towards the operational position. As the first hydraulic cylinder is connected to the second hydraulic cylinder, the first hydraulic cylinder is actuated in unison with the second hydraulic cylinder. Thereby, with the control valve in the unfolding position, the lowering movement of the arm is synchronized with an outward displacement of the sliding member carrying the rake rotor along the arm.

In a further embodiment according to the invention, the control valve can be set in a folding position for actuating the second hydraulic cylinder by means of pressurized hydraulic fluid for pivoting the arm from the operational position, for example the headland position and/or working position, towards the transport position. Thereby, hydraulic fluid discharged from the second hydraulic cylinder is supplied under pressure to the first hydraulic cylinder for displacing the sliding member inwards along the arm. In this case, the control valve has at least an unfolding position and a folding position. When the rake rotor is in the operational position, the control valve can be controlled to its folding position. In the folding position, the control valve is configured to direct pressurized hydraulic fluid to the second hydraulic cylinder so that the arm is folded towards the transport position. Also in this case, as the first and second hydraulic cylinders are connected to each other, the first hydraulic cylinder is actuated in unison with the second hydraulic cylinder. Thereby, with the control valve in the folding position, the lifting movement of the arm is synchronized with an inward displacement of the sliding member carrying the rake rotor along the arm.

According to an embodiment of the invention, the first and second hydraulic cylinder each comprise:
- a cylinder bottom and a cylinder head;
- a piston/piston rod assembly arranged to move axially back and forth, the piston/piston rod assembly comprising a piston rod which protrudes outwards through an associated bore in the cylinder head and a piston which is attached to the piston rod, the piston being displaceable over an axial stroke;
wherein the piston delimits in the cylinder between the piston and the cylinder head a variable head-side chamber, and further delimits between the piston and the cylinder bottom a variable bottom-side chamber; and
wherein the bottom-side chamber of the first hydraulic cylinder is hydraulically connected to the head-side chamber of the second hydraulic cylinder, such that pressurizing the head-side chamber of the first hydraulic cylinder or pressurizing the bottom-side chamber of the second hydraulic cylinder in order to move the corresponding piston of the first or second cylinder will automatically result in movement of the piston of the other of the first or second cylinder. The result of connecting the bottom-side chamber of the first hydraulic cylinder to the head-side chamber of the second cylinder is that pivoting the arm and increasing or decreasing the distance between rake rotor and frame during folding and unfolding is carried out simultaneously by pressurizing only one of the two chambers. As a result thereof, the centre of gravity of the arms and rake rotor during folding and unfolding is lower, thereby improving the stability of the machine according to the invention, especially on slopes.

In an embodiment of the invention, the second hydraulic cylinder is part of a double cylinder arrangement, preferably having a common piston rod, the double cylinder arrangement comprising a third hydraulic cylinder being configured to lift and lower the rake rotor between a working position and a headland position of the rake rotor. The working position and the headland position define two operational positions of the rake rotor. An advantage of this embodiment is that the hydraulic circuit can easily be controlled by using the second cylinder only for the folding and unfolding process and using the third hydraulic cylinder only during normal operation of the machine on the field, for moving the rake rotor between the working position and the headland position.

In an embodiment of the invention, the first hydraulic cylinder is part of a double cylinder arrangement, preferably having a common piston rod, the double cylinder arrangement comprising a fourth hydraulic cylinder being configured to adjust the position of the sliding member relative to the arm in the operational position, in particular the working position. An advantage thereof is that the hydraulic circuit can easily be controlled by using the first hydraulic cylinder only for the folding and unfolding process and using the fourth hydraulic cylinder only during normal operation of the machine on the field, in particular for adjusting the working width. The easy control of the hydraulic circuit is further improved by combining the above embodiments, so that both the first and second hydraulic cylinder are part of a double cylinder arrangement.

The invention also relates to a method for unfolding the machine as described above, comprising:
- providing the machine with the rake rotor in the transport position; and
- pressurizing the bottom-side chamber of the second hydraulic cylinder.

When the second hydraulic cylinder is part of a double cylinder arrangement including a third hydraulic cylinder as described above, the method to unfold may comprise:
- providing the machine with the rake rotor in the transport position and the third hydraulic cylinder in a retracted position;
- pressurizing the bottom-side chamber of the second hydraulic cylinder until the rake rotor is in the headland position; and
- pressurizing the third hydraulic cylinder to extend the cylinder and lowering the rake rotor to the working position in which the rake rotor is able to engage with the grass, hay or other crops on the field.

When the first hydraulic cylinder is part of a double cylinder arrangement including a fourth hydraulic cylinder as described above, the method to unfold may comprise:
- providing the machine with the rake rotor in the transport position and the fourth hydraulic cylinder in a retracted position;
- pressurizing the bottom-side chamber of the second hydraulic cylinder until the rake rotor is in the working position; and
- pressurizing the fourth hydraulic cylinder to adjust a position of the rake rotor relative to the arm.

In a preferred embodiment, the retracted position of the fourth hydraulic cylinder corresponds to a minimum distance between rake rotor and frame required during folding and unfolding.

The invention further relates to a method to fold the machine as described above, comprising:
- providing the machine with the rake rotor in the operation position, in particular the headland position; and
- pressurizing the head-side chamber of the first hydraulic cylinder.

When the second hydraulic cylinder is part of a double cylinder arrangement including a third hydraulic cylinder as described above, the method to fold may comprise:
- providing the machine with the rake rotor in a working position in which the rake rotor is able to engage with the grass, hay or other crops on the field;
- pressurizing the third hydraulic cylinder to retract the cylinder and lift the rake rotor;
- pressurizing the head-side chamber of the first hydraulic cylinder until the rake rotor is in the transport position.

When the first hydraulic cylinder is part of a double cylinder arrangement including a fourth hydraulic cylinder as described above, the method to fold may comprise:
- providing the machine with the rake rotor in the working position;
- pressurizing the fourth hydraulic cylinder to a retracted position; and
- pressurizing the head-side chamber of the first-hydraulic cylinder until the rake rotor is in the transport position.

In a preferred embodiment, the retracted position of the fourth hydraulic cylinder corresponds to a minimum distance between rake rotor and frame required during folding and unfolding.

The invention will now be explained in more detail with reference to the accompanying drawings, in which like parts are referred to using like reference symbols.
Fig. 1 shows a perspective view of a first embodiment of a agricultural machine according to the invention in the working position.
Fig. 2 shows a perspective view of the machine of Fig. 1 in the transport position.
Fig. 3A shows a perspective view of an arm of the machine of Fig. 1.
Fig. 3B shows a side view of the arm of Fig. 3A.
Fig. 4 shows a hydraulic circuit of the machine of Fig. 1.
Figs.5A - 5E show the machine of Fig. 1 being unfolded from the transport position to the headland position.
Figs. 6A - 6B show an arm of an agricultural machine according to a second embodiment of the invention.

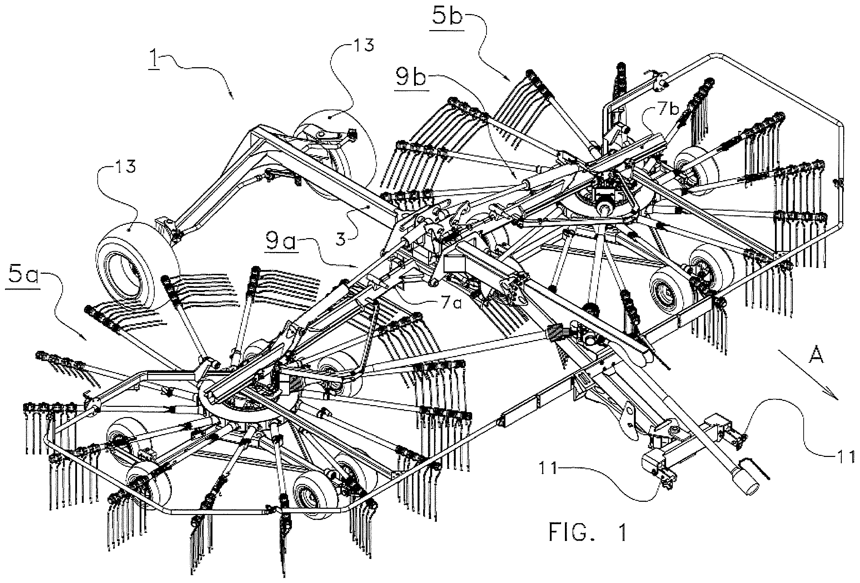

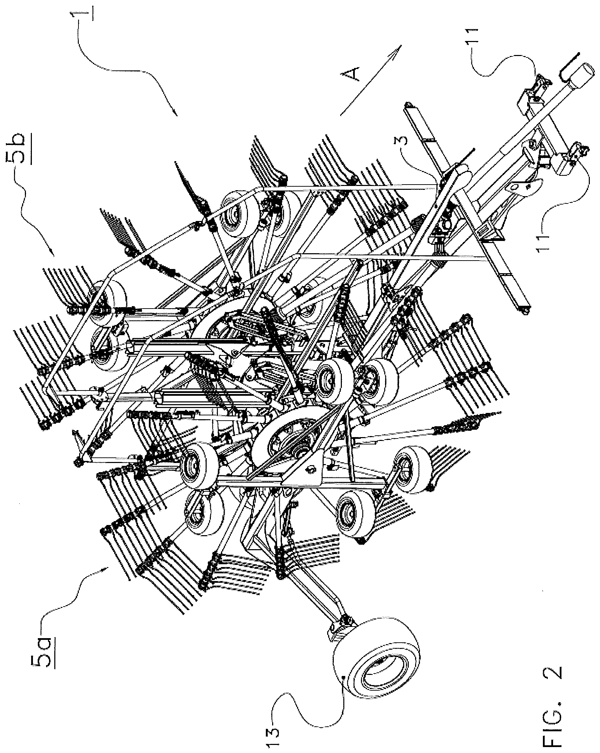

Figs. 1 and 2 show perspective views of an agricultural machine 1 according to a first embodiment of the invention. The agricultural machine 1 is a haymaking machine, in particular a rotary swather or rotary rake. The agricultural machine 1 comprises a frame 3 and two rake rotors 5a, 5b. The rake rotors 5a, 5b are connected to the frame 3 in such a manner that the rake rotors 5a, 5b can be driven in rotation about a rotation axis. Each rotor rake 5a, 5b comprises a rotor housing and a plurality of tine arms extending radially from the rotor housing and carrying tines at their outer ends.

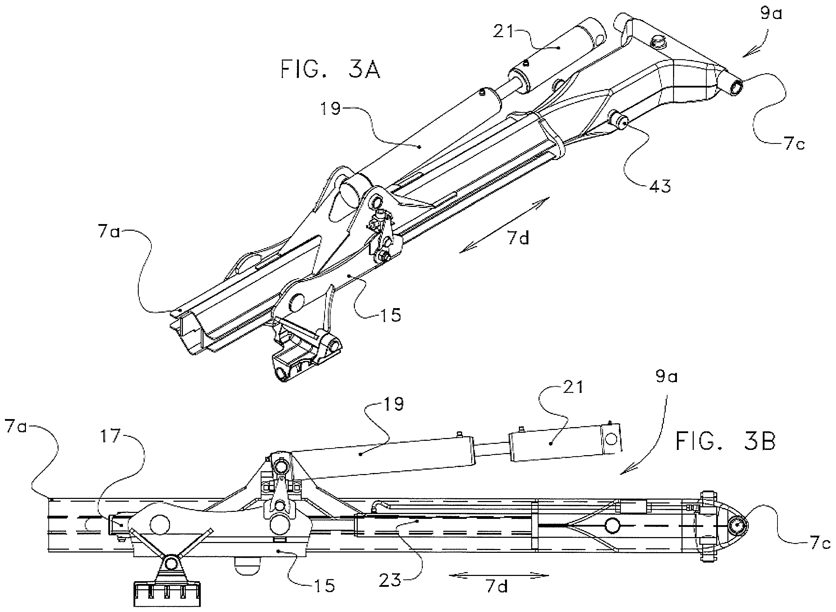

In this exemplary embodiment, the machine 1 has a vertical plane of symmetry which extends in a direction of travel A. The frame 3 is symmetrical to said plane of symmetry. The frame 3 comprises a central longitudinal axis. A folding mechanism 9a, 9b is associated with each rake rotor 5a, 5b to move said rake rotors 5a, 5b between a working position as shown in Fig. 1 and a transport position as shown in Fig. 2. Each folding mechanism 9a, 9b comprises an arm 7a, 7b, which is pivotally connected to the frame 3 about a substantially horizontal pivot axis 7c (see Figs. 3A and 3B). The arms 7a, 7b have a fixed length. The arms 7a, 7b extend on either side of the frame 3 transversely to the central longitudinal axis of the frame 3.

The frame 3 comprises a coupling device for coupling the machine 1 to a three-point lifting arrangement of a tractor (not shown). In this embodiment, the coupling device comprises coupling members 11 for hitching the machine 1 to the lower lifting arms of the tractor (not shown). The machine 1 is supported on the ground by supporting wheels 13. It should be noted that the supporting wheels 13 are optional, i.e. the machine according to the invention may also be trailed. In addition, the coupling device may be constructed in various ways.

Fig. 3A and 3B show the folding mechanism 9a of the machine shown in Figs. 1 and 2 in more detail. The folding mechanism 9a comprises a sliding member 15 configured to slide along the arm 7a in a longitudinal direction (see arrow 7d) of the arm 7a. In this embodiment, the sliding member 15 is a trolley which is guided by guiding members, such as sliding blocks or rollers, along two opposing longitudinal side grooves in the arm 7a. The sliding members 15 carry the respective rake rotors 5a, 5b.

A first hydraulic cylinder 17 (see Fig. 3B) is arranged between the arm 7a and the sliding member 15. The first hydraulic cylinder 17 is configured to adjust the position of the sliding member 15 relative to the arm 7a, as seen in the longitudinal direction of the arm 7a. In this embodiment, the first hydraulic cylinder 17 is arranged inside the arm 7a as can be seen in Fig. 3B.

A second hydraulic cylinder 19 is arranged between the arm 7a and the frame 3. By actuating the second hydraulic cylinder 19, the arm 7a can be pivoted about the pivot axis 7c, i.e. the angular orientation of the arm 7a relative to the frame 3 can be adjusted. The second hydraulic cylinder 19 is connected to the frame 3 via a third hydraulic cylinder 21. The second hydraulic cylinder 19 and the third hydraulic cylinder 21 form a first double cylinder arrangement having a common piston rod. Using said first double cylinder arrangement with the second and third hydraulic cylinders 19, 21, the second hydraulic cylinder 19 can be used during folding and unfolding of the associated rake rotor 5a, 5b, whereas the third hydraulic cylinder 21 enables the arm 7a, 7b and associated rake rotor 5a, 5b to be lifted to a headland position during operation, in particular at the end of a field when the machine is turned around.

Hence, the machine 1 may have multiple operational positions for the rake rotors, i.e. a working position in which the rake rotors 5a, 5b are able to engage with the hay, grass or other crops lying loosely on the field, and a headland position in which the rake rotors 5a, 5b are raised to the extent that they are disengaged from the hay, grass or other crops lying loosely on the field. In the working position, the rake rotors 5a, 5b are supported on the ground by wheel assemblies. When the rake rotors 5a, 5b are lifted by the third hydraulic cylinder 21, said wheel assemblies will be disengaged from the ground.

The first hydraulic cylinder 17 is connected to the arm 7a via a fourth hydraulic cylinder 23. The fourth hydraulic cylinder 23 is also arranged within the interior of the arm 7a. The first and fourth hydraulic cylinder 17, 23 form a second double cylinder arrangement having a common piston rod. Using said second double cylinder arrangement with the first and fourth hydraulic cylinders 17, 23, the first hydraulic cylinder 17 can be used to adjust the position of the rake rotors 5a, 5b relative to the arms 7a, 7b, as seen in their longitudinal direction, during folding and unfolding of the associated rake rotors 5a, 5b, whereas the fourth hydraulic cylinder 23 can adjust the working width of the rake rotors 5a, 5b in the working position.

It is possible for the third and fourth hydraulic cylinders 21, 23 to cooperate during a change of the position of a rake rotor 5a, 5b relative to the associated arm 7a, 7b. For instance, when the position of the rake rotor 5a, 5b relative to the associated arm 7a, 7b needs to be changed, the third cylinder 21 may first lift the rake rotor 5a, 5b from the ground, so that there is no engagement with hay, grass, other crops on the field or the ground, so that subsequently the fourth hydraulic cylinder 23 can be used to adjust the position of the rake rotor 5a, 5b relative to the arm 7a, 7b, and finally the third hydraulic cylinder 21 is used to lower the rake rotor 5a, 5b again. However, the position of the rake rotor 5a, 5b can also be adjusted relative to the associated arm 7a, 7b, in particular for changing the working width, while the machine is in the working position and thus without lifting the rake rotors 5a, 5b.

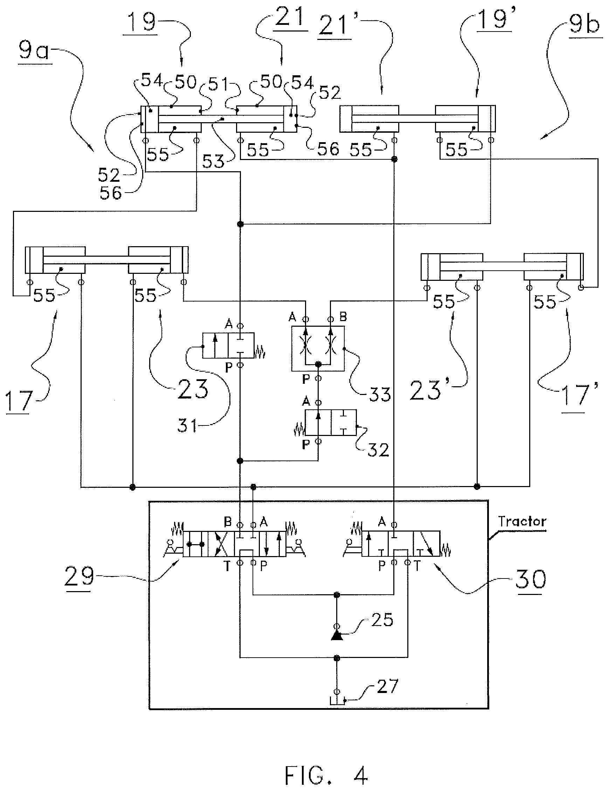

Fig. 4 depicts schematically a hydraulic system or hydraulic circuit of the machine of Figs. 1 and 2. On the left side of the hydraulic circuit, the hydraulic cylinders 17, 19, 21, 23 of the folding mechanism 9a of Figs. 3A and 3B are schematically depicted, see the first double cylinder arrangement comprising the first hydraulic cylinder 17 and the fourth hydraulic cylinder 23, and the second double cylinder arrangement comprising the second hydraulic cylinder 19 and the third hydraulic cylinder 21.

Similar hydraulic cylinders 17', 19', 21' and 23' of folding mechanism 9b associated with the other rake rotor of the machine of Figs. 1 and 2 are shown on the right side of the hydraulic circuit. The folding mechanisms 9a, 9b have been connected in parallel to the hydraulic system of the tractor shown at the bottom of Fig. 4.

The hydraulic system of the tractor comprises a hydraulic pump 25 to provide pressurized hydraulic fluid, and a tank 27 to which hydraulic fluid can be returned and re-used by the pump. The tractor has two control valves 29, 30, one control valve 29 shown on the right and one control valve 30 shown on the left. By means of the control valves 29, 30, the operator in the tractor can control the unfolding/folding process of the machine 1.

In Fig. 4, the control valve 29 is in a non-operative state in which a port P, which is in fluid communication with the pump 25, is connected to a port T, which is in fluid communication with the tank 27. In this case, ports A en B on the machine side of the control valve 29 are not connected with the hydraulic system of the tractor. Shown to the left of the non-operative state is a cross-flow state of the control valve 29. When the control valve 29 is put in this state, the port P is connected to the port B and the port T is connected to the port A (crosswise). Shown to the right of the non-operative state is a parallel-flow state of the control valve 29. When the control valve 29 is put in this state, the port P is connected to the port A and the port T is connected to the port B.

In Fig. 4, the control valve 30 is in a non-operative state in which a port P, which is in fluid communication with the pump 25, is connected to a port T, which is in fluid communication with the tank 27. In this case, a port A on the machine side of the control valve 30 is not connected to the hydraulic system of the tractor. Shown to the left of the non-operative state is a pressure state of the control valve 30. When the control valve 30 is put in this state, the port P is connected to the port A allowing to pressurize the port A. Shown to the right of the non-operative state is a relief state of the control valve 30. When the control valve 30 is put in this state, the port T is connected to port A allowing hydraulic fluid to flow to the tank 27.

Each hydraulic cylinder shown in Fig. 4 comprises a cylinder sleeve 50 with a cylinder bottom 52 and a cylinder head 51, and also a piston/piston rod assembly which can move axially back and forth. The piston/piston rod assembly comprises a piston rod 53 which protrudes outwards through an associated bore in the cylinder head 51 and a piston 54 which is securely attached to the piston rod 53 and which is displaceable over an axial stroke between the cylinder bottom 52 and the cylinder head 51. The piston 54 delimits between the piston 54 and the cylinder head 51 a variable head-side chamber 55, and further delimits between the piston 54 and the cylinder bottom 52 a variable bottom-side chamber 56.

The hydraulic circuit on the machine side further comprises two control valves 31 and 32, which can be operated between an open state and a closed state. In Fig. 4, the control valve 31 is shown in the closed state and the control valve 32 is shown in the open state.

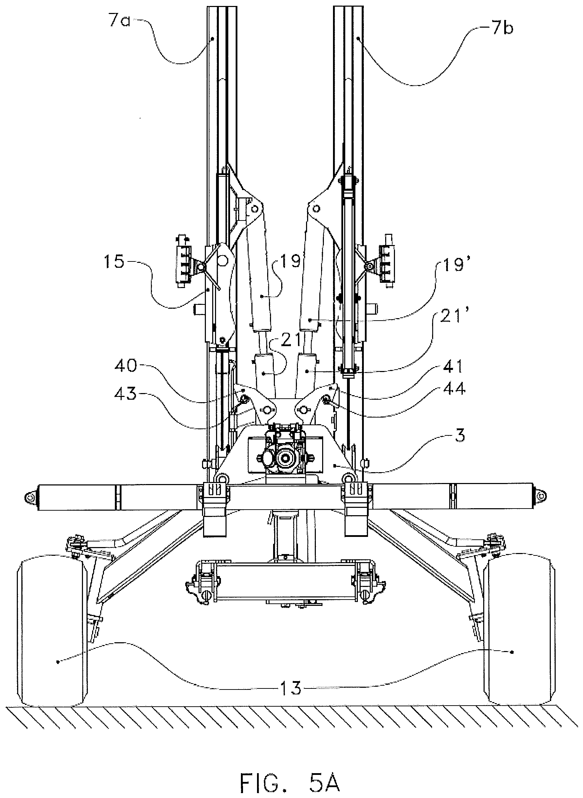

The state of the hydraulic circuit as shown in Fig. 4 may correspond to the situation of the machine as shown in Fig. 5A. Fig. 5A is a front view of the machine of Figs. 1 and 2. Although the rake rotors 5a, 5b are omitted in this figure, they are in the transport position, i.e. the arms 7a, 7b extend substantially vertically and upwards from the frame 3. All hydraulic cylinders of the folding mechanisms are retracted meaning that the pistons 54 are close to the cylinder bottom 52 (see also Fig. 4).

The position of the arms 7a, 7b may be mechanically locked by respective locking elements 40, 41 on the frame 3 that engage with corresponding pins 43, 44 on the arms 7a, 7b. After disengaging the locking elements 40, 41 and the pins 43, 44 from each other, the rake rotors can be unfolded. For unfolding, the control valve 29 is put in the cross-flow state, the control valve 32 is put in the closed state, the control valve 31 is put in the open state, and the control valve 30 is put in the non-operative state. As a result thereof, the port B is pressurized. The port B is in fluid connection with the control valves 31 and 32. However, due to the states of these valves 31, 32, the hydraulic fluid can only flow through the control valve 31 towards the bottom-side chambers 56 of the second hydraulic cylinders 19 and 19'. As a result of pressurizing the bottom-side chambers 56, the corresponding pistons 54 are urged in the direction of the cylinder heads 51, thereby pivoting the arms towards the headland position and/or working position.

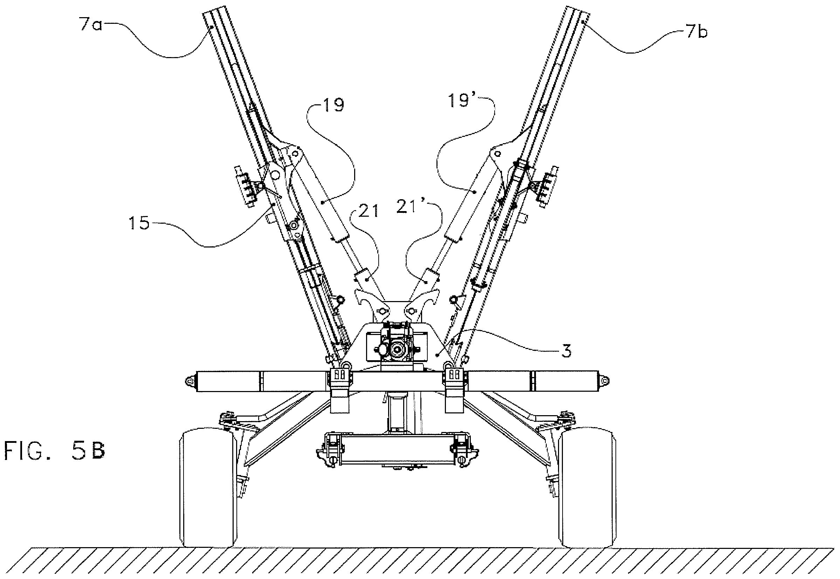

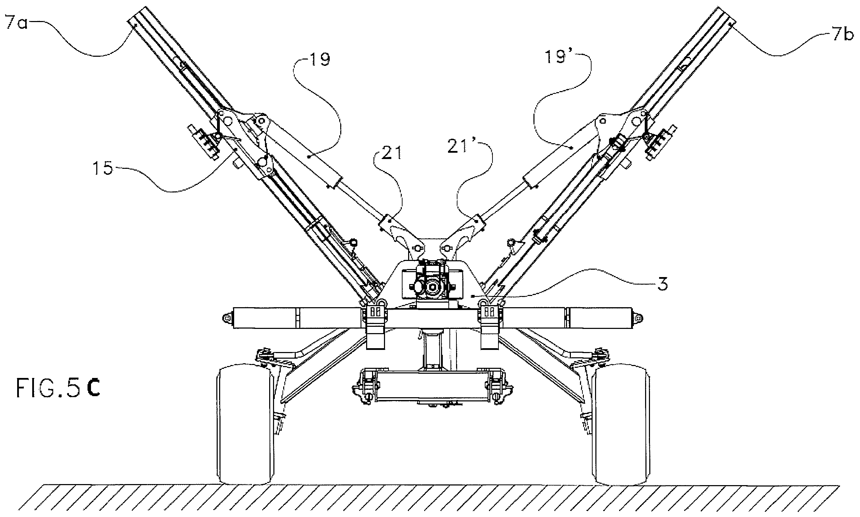

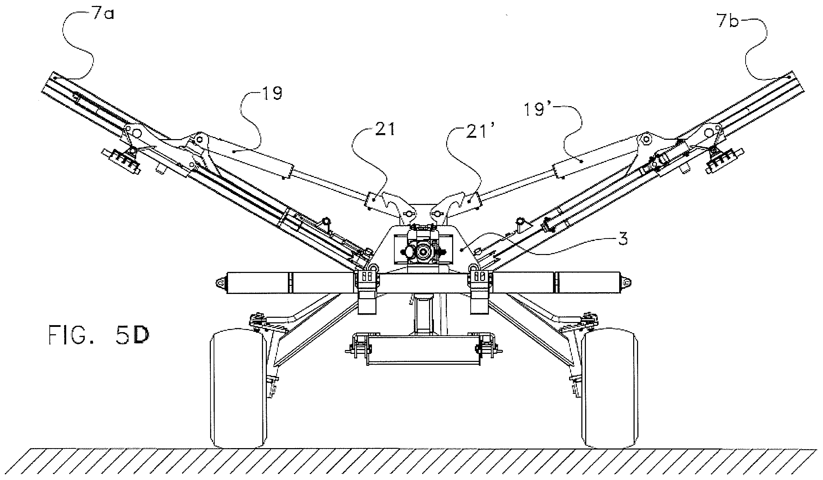

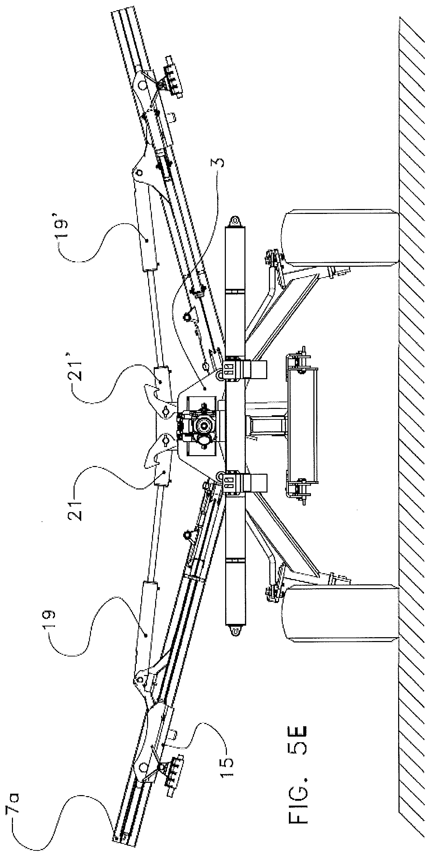

The head-side chambers 55 of the hydraulic cylinders 19, 19' are connected by means of fluid lines to the bottom-side chambers 56 of the first hydraulic cylinders 17, 17', respectively, so that the movement of the piston 54 towards the cylinder head 51 in the second hydraulic cylinders 19, 19' will cause hydraulic fluid to be supplied under pressure to the bottom-side chambers 56 of the first hydraulic cylinders 17, 17', thereby urging the corresponding pistons 53 in the direction of the cylinder heads. This results in a pivoting movement of the arms 7a, 7b and a sliding movement of the sliding member outwards, i.e. away from the frame 3, being carried out substantially simultaneously, as shown in Figs. 5B, 5C and 5D in which the unfolding process is shown. Fig. 5E depicts the arms 7a, 7b in the headland position (operational position), wherein the hydraulic cylinders 19, 19' and 17, 17' have been substantially fully extended.

The machine 1 can be folded back vice versa. Now the control valve 29 is put in the parallel-flow state, so that the head-side chambers of the first hydraulic cylinders 17, 17' are pressurized thereby urging the corresponding pistons towards the cylinder bottom 52, which results in pressurizing the head-side chambers of the second hydraulic cylinders 19, 19' due to the fluid connection between bottom-side chambers of the first hydraulic cylinders 17, 17' and the head-side chambers of the second hydraulic cylinders 19, 19'.

An advantage of the hydraulic connection between the second hydraulic cylinders 19, 19' on the one hand and the first hydraulic cylinders 17, 17' on the other hand is that the hydraulic cylinders 19, 17 and 19', 17', respectively, are automatically synchronized and cooperate together while folding and unfolding. As a result, the centre of gravity of the rake rotors 5a, 5b during folding and unfolding remains low. This leads to a more stable machine, which is especially beneficial in mountain areas. In addition, in case of a malfunction of one of the hydraulic cylinders, e.g. one of the hydraulic cylinders gets stuck halfway the folding procedure, the other hydraulic cylinder will also follow this malfunction and thus also stop moving. This prevents the machine from damaging itself during a malfunction.

At the end of the unfolding process shown in Figs. 5A to 5E, when all hydraulic cylinders 17, 17', 19, 19' have been substantially fully extended, the machine 1 is in the headland position shown in Fig. 5E in which the rake rotors 5a, 5b are positioned substantially horizontal. In this headland position, the rake rotors 5a, 5b are not able yet to engage with grass, hay or other crops on the field. The headland position (operational position) of the rake rotors 5a, 5b is used when making a turn at the end of a field and engagement between rake rotors 5a, 5b and grass, hay or other crops on the field should temporarily be avoided.

In order to lower the rake rotors 5a, 5b to the working position (other operational position) in which the rake rotors 5a, 5b are arranged to engage grass, hay or other crops on the field, the third hydraulic cylinders 21 and 21' are used. The control valve 29 is put in the non-operative state as the other hydraulic cylinders are not used. The control valve 30 is put in the relieve state allowing hydraulic fluid in the head-side chambers of hydraulic cylinders 21, 21' to be pushed towards the tank 27 by gravity acting on the rake rotors 5a, 5b. This will extend the hydraulic cylinders 21, 21' and lower the rake rotors 5a, 5b to the working position as shown in Fig. 1.

For lifting the rake rotors, 5a, 5b from the working position to the headland position shown in Fig. 5E, the control valve 30 should be put in the pressure state so that the head-side chambers of hydraulic cylinders 21, 21' are pressurized and retracted.

To adjust the working width of the rake rotors 5a, 5b, the fourth hydraulic cylinders 23, 23' are used. The control valve 29 is put in the cross-flow state when the working width needs to be increased, and is put in the parallel-flow state in case the working width needs to be decreased. The control valve 31 is put in the closed state and the control valve 32 is put in the open state. Then, the hydraulic fluid is able to flow from or to the bottom-side chambers of the fourth hydraulic cylinders 23, 23' via a throttle valve 33 to adjust the working width of the raking rotors 5a, 5b.

Although it is not shown in the figures, measures may be taken to keep the working width of the rake rotors at or above a minimal working width during folding and unfolding to prevent damage to the machine 1. When the rake rotors 5a, 5b are moved from the transport position towards the headland position and/or the working position, the rake rotors 5a, 5b may not hit each other underneath the frame 3.

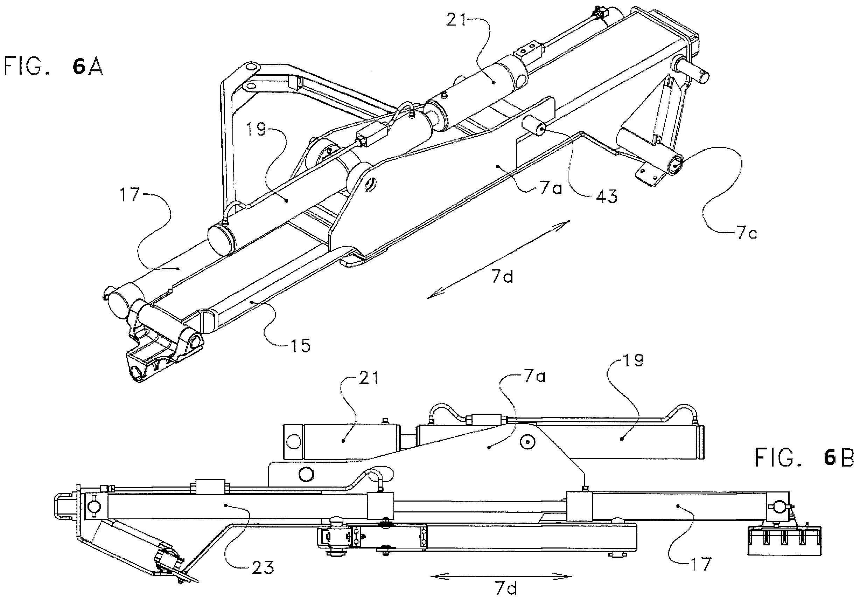

Figs. 6A and 6B depict another embodiment of a folding mechanism which is similar to the folding mechanism of Figs. 3A and 3B, but, instead of an arm having a fixed length in combination with a trolley being displaceable along the arm, this embodiment has a telescopic arm having a tubular outer arm which is pivotally connected to the frame and an inner arm which is connected to the tubular outer arm in a telescopic manner. In this case, the hydraulic cylinders 17 and 23 are not positioned inside the arm but extend externally thereof. The embodiment shown in Fig. 6A and 6B may have the same hydraulic circuit as shown in Fig. 4.

## Claims

1. An agricultural machine (1), in particular for windrowing crop lying loosely on the ground, for example mowed grass or hay, such as a rotary swather, the machine (1) comprising:
- a frame (3);
- an arm (7a, 7b) being pivotally connected to the frame (3) about a substantially horizontal axis (7c);
- a sliding member (15) being connected to the arm (7a, 7b) in such a manner that the sliding member (15) can be displaced along the arm (7a, 7b) in its longitudinal direction,
- a hydraulic system, the hydraulic system comprising:
• a first hydraulic cylinder (17) being configured to adjust the position, as seen in the longitudinal direction of the arm (7a, 7b), of the sliding member (15) relative to the arm (7a, 7b),
• a second hydraulic cylinder (19) being configured to pivot the arm (7a, 7b) relative to the frame (3),
- a rake rotor (5a, 5b) being carried by the sliding member (15), the rake rotor (5a, 5b) being displaceable, using the hydraulic system, between a transport position, wherein the arm (7a, 7b) extends substantially vertically, and at least one operational position, for example a headland position and/or working position, wherein the arm (7a, 7b) protrudes outwards with respect to the frame (3), in particular substantially horizontally,
**characterized in that** the first hydraulic cylinder (17) and the second hydraulic cylinder (19) are connected to each other in such a manner that when the second hydraulic cylinder (19) is actuated by means of pressurized hydraulic fluid for pivoting the arm (7a, 7b) from the transport position towards the operational position, for example the headland position and/or working position, hydraulic fluid discharged from the second hydraulic cylinder (19) is supplied under pressure to the first hydraulic cylinder (17) for displacing the sliding member (15) outwards along the arm (7a, 7b) substantially from the start of the pivoting movement of the arm (7a, 7b) from the transport position.

2. The machine as claimed in claim 1, wherein the second hydraulic cylinder (19) and the first hydraulic cylinder (17) are connected hydraulically in series.

3. The machine as claimed in claim 1 or 2, wherein the hydraulic system comprises a control valve (29) which can be set in an unfolding position for actuating the second hydraulic cylinder (19) by means of pressurized hydraulic fluid for pivoting the arm (7a, 7b) from the transport position towards the operational position, for example the headland position and/or working position.

4. The machine as claimed in claim 3, wherein the control valve (29) can be set in a folding position for actuating the second hydraulic cylinder (19) by means of pressurized hydraulic fluid for pivoting the arm (7a, 7b) from the operational position, for example the headland position and/or working position, towards the transport position so that hydraulic fluid discharged from the second hydraulic cylinder (19) is supplied under pressure to the first hydraulic cylinder (17) for displacing the sliding member (15) inwards along the arm (7a, 7b).

5. The machine as claimed in one or more of the preceding claims, wherein the first and second hydraulic cylinder (17, 19) each comprise:
- a cylinder bottom (52) and a cylinder head (51),
- a piston/piston rod assembly arranged to move axially back and forth, the piston/piston rod assembly comprising a piston rod (53) which protrudes outwards through an associated bore in the cylinder head (51) and a piston (54) which is attached to the piston rod (53);
wherein the piston (54) delimits in the cylinder between the piston (54) and the cylinder head (51) a variable head-side chamber (55), and further delimits between the piston (54) and the cylinder bottom (52) a variable bottom-side chamber (56); and
wherein the bottom-side chamber (56) of the first hydraulic cylinder (17) is hydraulically connected to the head-side chamber (55) of the second hydraulic cylinder (19), such that pressurizing the head-side chamber (55) of the first hydraulic cylinder (17) or pressurizing the bottom-side chamber (56) of the second hydraulic cylinder (19) in order to move the corresponding piston (54) of the first or second hydraulic cylinder (17, 19) will automatically result in movement of the piston (54) of the other of the first or second hydraulic cylinder (17, 19).

6. The machine as claimed in one or more of the preceding claims, the second hydraulic cylinder (19) is pivotally connected between the frame (3) and the arm (7a, 7b).

7. The machine as claimed in one or more of the preceding claims, wherein the second hydraulic cylinder (19) is part of a first double cylinder arrangement, said first double cylinder arrangement comprising a third hydraulic cylinder (21) being configured to lift and lower the rake rotor (5a, 5b) between a working position and a headland position of the rake rotor (5a, 5b).

8. The machine as claimed in one or more of the preceding claims, wherein the first hydraulic cylinder (17) is part of a second double cylinder arrangement, said second double cylinder arrangement comprising a fourth hydraulic cylinder (23) being configured to adjust the position, as seen in the longitudinal direction of the arm (7a, 7b), of the sliding member (15) relative to the arm (7a, 7b) in the operational position, in particular the working position.

9. The machine as claimed in one or more of the preceding claims, wherein the arm (7a, 7b) has a fixed length, and wherein the sliding member (15) comprises a trolley which can be displaced in a guided manner along said arm (7a, 7b).

10. The machine as claimed in one or more of claims 1-8, wherein the arm (7a, 7b) comprises an outer tubular arm, and wherein the sliding member (15) comprises an inner arm which is connected in a telescopic manner to the outer tubular arm.

11. The machine as claimed in one or more of the preceding claims, comprising a second arm (7a, 7b) being pivotally connected to the frame (3), a second sliding member (15) being connected to the second arm (7a, 7b) in such a manner that the second sliding member (15) can be displaced along the second arm (7a, 7b) in its longitudinal direction, a second rake rotor (5a, 5b) being carried by the second sliding member (15), wherein the second rake rotor (5a, 5b) is displaceable, using the hydraulic system, between a transport position and at least one operational position, for example a headland position and/or working position, wherein the rake rotors (5a, 5b) in their working positions are configured to deliver a central swath between them.

12. A method for unfolding the machine (1) as claimed in one or more of the claims 2-11, comprising:
- providing the machine (1) with the rake rotor (5a, 5b) in the transport position; and
- pressurizing the bottom-side chamber (56) of the second hydraulic cylinder (19).

13. A method for folding the machine (1) as claimed in one or more of the claims 2-11, comprising:
- providing the machine (1) with the rake rotor (5a, 5b) in the operation position; in particular the headland position, and
- pressurizing the head-side chamber (55) of the first hydraulic cylinder (17).

14. A method for unfolding the machine (1) as claimed in one or more of the claims 7-11, comprising:
- providing the machine (1) with the rake rotor (5a, 5b) in the transport position and the third hydraulic cylinder (21) in a retracted position;
- pressurizing the bottom-side chamber (56) of the second hydraulic cylinder (19) until the rake rotor (5a, 5b) is in the headland position; and
- pressurizing the third hydraulic cylinder (21) to extend said cylinder (21) and lowering the rake rotor (5a, 5b) to the working position, wherein the rake rotor (5a, 5b) is able to engage with crop lying on the ground.

15. A method for unfolding the machine as claimed in one or more of the claims 8-11, comprising:
- providing the machine (1) with the rake rotor (5a, 5b) in the transport position and the fourth hydraulic cylinder (23) in a retracted position;
- pressurizing the bottom-side chamber (56) of the second hydraulic cylinder (19) until the rake rotor (5a, 5b) is in a working position; and
- pressurizing the fourth hydraulic cylinder (23) to adjust a position of the rake rotor (5a, 5b) relative to the arm (7a, 7b).

## Patentansprüche

1. Landwirtschaftliche Maschine (1), insbesondere zum Schwaden von lose am Boden liegendem Erntegut, z. B. gemähtem Gras oder Heu, wie etwa ein Kreiselschwader, wobei die Maschine (1) das Folgende aufweist:
- einen Rahmen (3);
- einen schwenkbar um eine im Wesentlichen horizontale Achse (7c) mit dem Rahmen (3) verbundenen Arm (7a, 7b);
- ein Gleitelement (15), das mit dem Arm (7a, 7b) in einer solchen Weise verbunden ist, dass das Gleitelement (15) entlang des Arms (7a, 7b) in seiner Längsrichtung verlagert werden kann,
- ein hydraulisches System, mit
• einem ersten Hydraulikzylinder (17), der dazu konfiguriert ist, die Position des Gleitelements (15) relativ zu dem Arm (7a, 7b), betrachtet in der Längsrichtung des Arms (7a, 7b), einzustellen,
• einem zweiten Hydraulikzylinder (19), der zum Verschwenken des Arms (7a, 7b) relativ zu dem Rahmen (3) konfiguriert ist,
aufweist,
- einen von dem Gleitelement (15) getragenen Schwadkreisel (5a, 5b), der unter Benutzung des hydraulischen Systems zwischen einer Transportposition, in der sich der Arm (7a, 7b) im Wesentlichen vertikal erstreckt, und mindestens einer Betriebsposition, beispielsweise einer Vorgewendeposition und/oder Arbeitsposition verlagerbar ist, in der der Arm (7a, 7b) in Bezug auf den Rahmen (3) nach außen vorkragt, insbesondere im Wesentlichen horizontal,
**dadurch gekennzeichnet, dass** der erste Hydraulikzylinder (17) und der zweite Hydraulikzylinder (19) derart miteinander verbunden sind, dass, wenn der zweite Hydraulikzylinder (19) mittels eines unter Druck stehenden Hydraulikfluids für das Verschwenken des Arms (7a, 7b) von der Transportposition in die Betriebsposition betätigt wird, z. B. die Vorgewendeposition und/oder die Arbeitsposition, aus dem zweiten Hydraulikzylinder (19) ausgestoßenes Hydraulikfluid unter Druck dem ersten Hydraulikzylinder (17) zum Verlagern des Gleitelements (15) nach außen entlang des Arms (7a, 7b) im Wesentlichen von dem Beginn der Verschwenkbewegung des Arms (7a, 7b) aus der Transportposition unter Druck zugeführt wird.

2. Maschine nach Anspruch 1, wobei der zweite Hydraulikzylinder (19) und der erste Hydraulikzylinder (17) hydraulisch in Reihe geschaltet sind.

3. Maschine nach Anspruch 1 oder 2, wobei das hydraulische System ein Steuerventil oder Regelventil (29) aufweist, das zum Betätigen des zweiten Hydraulikzylinders (19) mittels eines unter Druck stehenden Hydraulikfluids in eine Entfaltposition zum Verschwenken des Arms (7a, 7b) von der Transportposition in Richtung auf die Arbeitsposition, z. B. die Vorgewendeposition und/oder Arbeitsposition, gestellt werden kann.

4. Maschine nach Anspruch 3, wobei das Steuerventil oder Regelventil (29) in eine Faltposition zum Betätigen des zweiten Hydraulikzylinders (19) mittels des unter Druck stehenden Hydraulikfluids zum Verschwenken des Arms (7a, 7b) aus der Betriebsposition, z. B. der Vorgewendeposition und/oder Arbeitsposition, in Richtung auf die Transportposition gestellt werden kann, so dass aus dem zweiten Hydraulikzylinder (19) ausgestoßenes Hydraulikfluid unter Druck dem ersten Hydraulikzylinder (17) zugeführt wird, um das Gleitelement (15) nach innen entlang des Arms (7a, 7b) zu verlagern.

5. Maschine nach einem oder mehreren der vorhergehenden Ansprüche, wobei der erste und zweite Hydraulikzylinder (17, 19) jeweils Folgendes aufweist:
- einen Zylinderboden (52) und einen Zylinderkopf (51),
- eine Kolben/Kolbenstangen-Anordnung, die dazu angeordnet ist, sich axial vorwärts und rückwärts zu bewegen, wobei sie eine Kolbenstange (53), die sich nach außen durch eine zugeordnete Bohrung in dem Zylinderkopf (51) erstreckt und einen an der Kolbenstange (53) befestigten Kolben (54) aufweist;
wobei der Kolben (54) in dem Zylinder zwischen dem Kolben (54) und dem Zylinderkopf (51) eine variable kopfseitige Kammer (55) und weiterhin zwischen dem Kolben (54) und dem Zylinderboden (52) eine variable bodenseitige Kammer (56) begrenzt und
wobei die bodenseitige Kammer (56) des ersten Hydraulikzylinders (17) hydraulisch mit der kopfseitigen Kammer (55) des zweiten Hydraulikzylinders (19) verbunden ist, so dass eine Druckbeaufschlagung der kopfseitigen Kammer (55) des ersten Zylinders (17) oder eine Druckbeaufschlagung der bodenseitigen Kammer (56) des zweiten Hydraulikzylinders (19) um den zugeordneten Kolben (54) des ersten oder zweiten Hydraulikzylinders (17, 19) zu bewegen, automatisch zu einer Bewegung des Kolbens (54) des anderen des ersten oder zweiten Hydraulikzylinders (17, 19) führt.

6. Maschine nach einem oder mehrere der vorhergehenden Ansprüche, wobei der zweite Hydraulikzylinder (19) schwenkbar zwischen dem Rahmen (3) und dem Arm (7a, 7b) verbunden ist.

7. Maschine nach einem oder mehreren der vorhergehenden Ansprüche, wobei der zweite Hydraulikzylinder (19) Teil einer ersten Doppelzylinderanordnung ist, wobei die erste Doppelzylinderanordnung einen dritten Hydraulikzylinder (21) aufweist, der dafür konfiguriert ist, den Schwadkreisel (5a, 5b) zwischen einer Arbeitsposition und einer Vorgewendeposition des Schwadkreisels (5a, 5b) anzuheben und abzusenken.

8. Maschine nach einem oder mehreren der vorhergehenden Ansprüche, wobei der erste Hydraulikzylinder (17) Teil einer zweiten Doppelzylinderanordnung ist, wobei die zweite Doppelzylinderanordnung einen vierten Hydraulikzylinder (21) aufweist, der dafür konfiguriert ist, die Position des Gleitelements (15) relativ zu dem Arm (7a, 7b) in der Betriebsposition, insbesondere der Arbeitsposition, betrachtet in der Längsrichtung des Arms (7a, 7b), einzustellen.

9. Maschine nach einem oder mehreren der vorhergehenden Ansprüche, wobei der Arm (7a, 7b) eine feste Länge besitzt und das Gleitelement (15) einen Läufer aufweist, der auf eine geführte Weise entlang des Arms (7a, 7b) verlagert werden kann.

10. Maschine nach einem oder mehreren der Ansprüche 1-8, wobei der Arm (7a, 7b) einen äußeren röhrenförmigen Arm aufweist, und wobei das Gleitelement (15) einen inneren Arm aufweist, der in teleskopartiger Weise mit dem äußeren röhrenförmigen Arm verbunden ist.

11. Maschine nach einem oder mehreren der vorhergehenden Ansprüche, die Folgendes aufweist: einen zweiten schwenkbar mit dem Rahmen (3) verbundenen Arm (7a, 7b), ein zweites Gleitelement (15), das mit dem zweiten Arm (7a, 7b) auf solche Weise verbunden ist, dass das zweite Gleitelement (15) entlang des zweiten Arms (7a, 7b) in seiner Längsrichtung verlagert werden kann, einem durch das zweite Gleitelement getragenen zweiten Schwadkreisel (5a, 5b), wobei der zweiten Schwadkreisel (5a, 5b) unter Nutzung des hydraulischen Systems zwischen einer Transportposition und mindestens einer Betriebspositio verschiebbar ist n, z. B. einer Vorgewendeposition und/oder Arbeitsposition, wobei die Schwadkreisel (5a, 5b) in ihren Arbeitspositionen dafür konfiguriert sind, zwischen sich eine zentrale Schwade bereitzustellen.

12. Verfahren zum Entfalten der Maschine (1) nach einem oder mehreren der Ansprüche 2-11, mit:
- Ausstatten der Maschine (1) mit dem Schwadkreisel (5a, 5b) in der Transportposition; und
- Druckbeaufschlagen der bodenseitigen Kammer (56) des zweiten hydraulischen Zylinders (19).

13. Verfahren zum Falten der Maschine (1) nach einem oder mehreren der Ansprüche 2-11, mit:
- Ausstatten der Maschine (1) mit dem Schwadkreisel (5a, 5b) in der Betriebsposition; insbesondere der Vorwendeposition, und
- Druckbeaufschlagen der kopfseitigen Kammer (55) des ersten Hydraulikzylinders (17).

14. Verfahren zum Entfalten der Maschine (1) nach einem oder mehreren der Ansprüche 7-11, mit:
- Ausstatten der Maschine (1) mit dem Schwadkreisel (5a, 5b) in der Transportposition und dem dritten Hydraulikzylinder (21) in einer zurückgezogenen Position;
- Druckbeaufschlagen der bodenseitigen Kammer (56) des zweiten Hydraulikzylinders (19), bis sich der Schwadkreisel (5a, 5b) in der Vorgewendeosition befindet; und
- Druckbeaufschlagen des dritten Hydraulikzylinders (21), um den Zylinder (21) auszufahren und den Schwadkreisel (5a, 5b) in die Arbeitsposition abzusenken, wobei der Schwadkreisel (5a, 5b) an Erntegut angreifen kann, das auf dem Boden liegt.

15. Verfahren zum Entfalten der Maschine nach einem oder mehreren der Ansprüche 8-11, mit:
- Ausstatten der Maschine (1) mit dem Schwadkreisel (5a, 5b) in der Transportposition und dem vierten Hydraulikzylinder (23) in einer zurückgezogenen Position;
- Druckbeaufschlagen der bodenseitigen Kammer (56) des zweiten Hydraulikzylinders (19), bis sich der Schwadkreisel (5a, 5b) in einer Arbeitsposition befindet; und
- Druckbeaufschlagen des vierten Hydraulikzylinders (23), um eine Position des Schwadkreisels (5a, 5b) relativ zu dem Arm (7a, 7b) einzustellen.

## Revendications

1. Machine agricole (1), destinée, en particulier, à mettre en andains une culture reposant sur le sol, par exemple, de l'herbe ou du foin fauché, telle qu'une andaineuse rotative, la machine (1) comprenant :
un bâti (3) ;
un bras (7a, 7b) relié au bâti (3) de manière à pouvoir pivoter autour d'un axe sensiblement horizontal (7c) ;
un élément coulissant (15) qui est relié au bras (7a, 7b) d'une telle manière que l'élément coulissant (15) peut être déplacé le long du bras (7a, 7b) dans sa direction longitudinale,
un dispositif hydraulique, le dispositif hydraulique comprenant :
un premier vérin hydraulique (17) qui est configuré de manière à régler la position, telle que vue dans la direction longitudinale du bras (7a, 7b), de l'élément coulissant (15) par rapport au bras (7a, 7b),
un deuxième vérin hydraulique (19) qui est configuré de manière à faire pivoter le bras (7a, 7b) par rapport au bâti (3),
un rotor de râteau (5a, 5b) supporté par l'élément coulissant (15), le rotor de râteau (5a, 5b) pouvant être déplacé, en utilisant le dispositif hydraulique, entre une position de transport, dans laquelle le bras (7a, 7b) s'étend sensiblement verticalement, et au moins une position opérationnelle, par exemple, une position de tête de champ et/ou une position de travail, dans laquelle le bras (7a, 7b) s'étend vers l'extérieur par rapport au bâti (3), en particulier, sensiblement horizontalement,
**caractérisée en ce que** le premier vérin hydraulique (17) et le deuxième vérin hydraulique (19) sont couplés l'un à l'autre d'une telle manière que lorsque le deuxième vérin hydraulique (19) est activé au moyen d'un fluide hydraulique pressurisé afin de faire pivoter le bras (7a, 7b) à partir de la position de transport vers la position opérationnelle, par exemple, la position de tête de champ et/ou la position de travail, le fluide hydraulique déchargé à partir du deuxième vérin hydraulique (19) est délivré sous pression au premier vérin hydraulique (17) afin de déplacer l'élément coulissant (15) vers l'extérieur le long du bras (7a, 7b) sensiblement à partir du début du mouvement pivotant du bras (7a, 7b) à partir de la position de transport.

2. Machine selon la revendication 1, dans laquelle le deuxième vérin hydraulique (19) et le premier vérin hydraulique (17) sont couplés hydrauliquement en série.

3. Machine selon la revendication 1 ou 2, dans laquelle le dispositif hydraulique comprend une vanne de commande (29) qui peut être positionnée dans une position de dépliage afin d'activer le deuxième vérin hydraulique (19) au moyen d'un fluide hydraulique sous pression afin de faire pivoter le bras (7a, 7b) à partir de la position de transport vers la position opérationnelle, par exemple, la position de tête de champ et/ou la position de travail.

4. Machine selon la revendication 3, dans laquelle la vanne de commande (29) peut être positionnée dans une position de pliage afin d'activer le deuxième vérin hydraulique (19) au moyen d'un fluide hydraulique sous pression afin de faire pivoter le bras (7a, 7b) à partir de la position opérationnelle, par exemple, la position de tête de champ et/ou la position de travail, vers la position de transport de telle sorte que le fluide hydraulique déchargé à partir du deuxième vérin hydraulique (19) est délivré sous pression au premier vérin hydraulique (17) afin faire déplacer l'élément coulissant (15) vers l'intérieur le long du bras (7a, 7b).

5. Machine selon une ou plusieurs des revendications précédentes, dans laquelle les premier et deuxième vérins hydrauliques (17, 19) comprennent chacun :
une partie inférieure de vérin (52) et une tête de vérin (51),
un ensemble piston/tige de piston agencé de manière à se déplacer axialement dans les deux sens, l'ensemble piston/tige de piston comprenant une tige de piston (53) qui s'étend vers l'extérieur à travers un alésage associé dans la tête de vérin (51) et un piston (54) qui est fixé sur la tige de piston (53) ;
dans laquelle le piston (54) délimite, dans le cylindre, entre le piston (54) et la tête de vérin (51), une chambre variable du côté tête (55), et délimite, en outre, entre le piston (54) et la partie inférieure de vérin (52), une chambre variable du côté partie inférieure (56) ; et
dans laquelle la chambre du côté partie inférieure (56) du premier vérin hydraulique (17) est couplée hydrauliquement à la chambre du côté tête (55) du deuxième vérin hydraulique (19), de telle sorte que la pressurisation de la chambre du côté tête (55) du premier vérin hydraulique (17) ou la pressurisation de la chambre du côté partie inférieure (56) du deuxième vérin hydraulique (19) dans le but de déplacer le piston correspondant (54) du premier ou deuxième vérin hydraulique (17, 19) conduit automatiquement à un mouvement du piston (54) de l'autre du premier ou deuxième vérin hydraulique (17, 19).

6. Machine selon une ou plusieurs des revendications précédentes, le deuxième vérin hydraulique (19) est relié de manière à pouvoir pivoter entre le bâti (3) et le bras (7a, 7b).

7. Machine selon une ou plusieurs des revendications précédentes, dans laquelle le deuxième vérin hydraulique (19) est une partie d'un premier agencement à double vérin, ledit premier agencement à double vérin comprenant un troisième vérin hydraulique (21) qui est configuré de manière à soulever et abaisser le rotor de râteau (5a, 5b) entre une position de travail et une position de tête de champ du rotor de râteau (5a, 5b).

8. Machine selon une ou plusieurs des revendications précédentes, dans laquelle le premier vérin hydraulique (17) est une partie d'un second agencement à double vérin, ledit second agencement à double vérin comprenant un quatrième vérin hydraulique (23) qui est configuré de manière à ajuster la position, telle que vue dans la direction longitudinale du bras (7a, 7b), de l'élément coulissant (15) par rapport au bras (7a, 7b) dans la position opérationnelle, en particulier, la position de travail.

9. Machine selon une ou plusieurs des revendications précédentes, dans laquelle le bras (7a, 7b) présente une longueur fixe, et dans laquelle l'élément coulissant (15) comprend un chariot qui peut être déplacé d'une manière guidée le long dudit bras (7a, 7b).

10. Machine selon une ou plusieurs des revendications 1 à 8, dans laquelle le bras (7a, 7b) comprend un bras tubulaire externe, et dans laquelle l'élément coulissant (15) comprend un bras interne qui est couplé d'une manière télescopique au bras tubulaire externe.

11. Machine selon une ou plusieurs des revendications précédentes, comprenant un second bras (7a, 7b) relié de manière à pouvoir pivoter au bâti (3), un second élément coulissant (15) étant relié au second bras (7a, 7b) d'une telle manière que le second élément coulissant (15) peut être déplacé le long du second bras (7a, 7b) dans sa direction longitudinale, un second rotor de râteau (5a, 5b) étant supporté par le second élément coulissant (15), dans laquelle le second rotor de râteau (5a, 5b) peut être déplacé, en utilisant le dispositif hydraulique, entre une position de transport et au moins une position opérationnelle, par exemple, une position de tête de champ et/ou une position de travail, dans laquelle les rotors de râteau (5a, 5b) dans leurs positions de travail sont configurés de manière à former un andain central entre les deux.

12. Procédé de dépliage de la machine (1) selon une ou plusieurs des revendications 2 à 11, comprenant :
la préparation de la machine (1) avec le rotor de râteau (5a, 5b) dans la position de transport ; et
la pressurisation de la chambre du côté partie inférieure (56) du deuxième vérin hydraulique (19).

13. Procédé de pliage de la machine (1) selon une ou plusieurs des revendications 2 à 11, comprenant :
la préparation de la machine (1) avec le rotor de râteau (5a, 5b) dans la position opérationnelle ; en particulier, la position de tête de champ, et
la pressurisation de la chambre du côté tête (55) du premier vérin hydraulique (17).

14. Procédé de dépliage de la machine (1) selon une ou plusieurs des revendications 7 à 11, comprenant :
la préparation de la machine (1) avec un rotor de râteau (5a, 5b) dans la position de transport et le troisième vérin hydraulique (21) dans une position rétractée ;
la pressurisation de la chambre du côté partie inférieure (56) du deuxième vérin hydraulique (19) jusqu'à ce que le rotor de râteau (5a, 5b) soit dans la position de tête de champ ; et
la pressurisation du troisième vérin hydraulique (21) afin d'étendre ledit vérin (21) et d'abaisser le rotor de râteau (5a, 5b) dans la position de travail, dans lequel le rotor de râteau (5a, 5b) peut être couplé avec la culture reposant sur le sol.

15. Procédé de dépliage de la machine selon une ou plusieurs des revendications 8 à 11, comprenant :
la préparation de la machine (1) avec le rotor de râteau (5a, 5b) dans la position de transport et le quatrième vérin hydraulique (23) dans une position rétractée ;
la pressurisation de la chambre du côté partie inférieure (56) du deuxième vérin hydraulique (19) jusqu'à ce que le rotor de râteau (5a, 5b) soit dans une position de travail ; et
la pressurisation du quatrième vérin hydraulique (23) afin de régler une position du rotor de râteau (5a, 5b) par rapport au bras (7a, 7b).
